# FASCICULE DE BREVET EUROPEEN

(11) **EP 1 703 611 B1**
(45) Date de publication et mention de la délivrance du brevet: **12.12.2007**
(21) Numéro de dépôt: 06300211.7
(22) Date de dépôt: 08.03.2006
(51) Int. Cl.: H02G 15/34, H01R 4/68

(54) **Traversée électrique pour élement supraconducteur**
Elektrische Durchführung für supraleitendes Element
Electrical feedthrough for superconducting element

(30) Priorité: 17.03.2005 FR 0550695
(43) Date de publication de la demande: 20.09.2006
(73) Titulaire: Nexans, 75008 Paris (FR)
(72) Inventeur: Mirebeau, Pierre, 91140 Villebon sur Yvette (FR); Lallouet, Nicolas, 62132 Fiennes (FR); Delplace, Sébastien, 62610 Ardres (FR); Lapierre, Régis, 92730 Marck (FR)
(74) Mandataire: Lenne, Laurence

(56) Documents cités:
- EP-A- 0 780 926
- EP-A- 1 283 576
- EP-A- 1 489 693

## Description

La présente invention a pour objet une traversée électrique pour élément supraconducteur, tel qu'un câble transportant du courant électrique sous moyenne ou haute tension. Cette traversée électrique permet de relier l'extrémité de l'élément supraconducteur à température cryogénique à un équipement ou dispositif à température ambiante, habituellement à l'air libre.

Du fait de la différence importante de température entre l'élément supraconducteur et l'équipement à relier audit élément, d'une part température cryogénique qui peut être de l'ordre de -200°C et d'autre part température ambiante, il est nécessaire d'intercaler une structure de connexion entre l'élément et l'équipement afin d'effectuer la transition de température en limitant au maximum les pertes thermiques, tout en respectant les contraintes électriques dues par exemple à la haute tension dans le cas d'un câble. Cette structure comporte une traversée électrique composée principalement d'un conducteur central entouré d'une gaine isolante, pour transporter le courant électrique du câble supraconducteur jusqu'à une connexion de sortie à température ambiante. Cette structure doit, sur une longueur raisonnable, effectuer la transition de température tout en s'assurant que les pertes par conduction thermique le long de la traversée électrique sont faibles, de façon à éviter l'ébullition du liquide cryogénique qui refroidit le câble. La section du conducteur central ne doit donc pas être trop grande. Cependant, un courant électrique d'intensité importante peut induire des pertes thermiques dues à l'échauffement du conducteur par effet Joule, et dans ce cas on a donc intérêt à augmenter la section du conducteur central. On a donc deux impératifs antinomiques.

Un autre problème technique à résoudre est de maîtriser la répartition du champ électrique créé par la moyenne ou haute tension du conducteur central de la traversée électrique de façon à éviter des claquages.

La solution connue au problème des pertes thermiques consiste à munir la structure de connexion d'une enceinte intermédiaire adiabatique, un sas ou une enceinte "tampon" en quelque sorte, placée entre la partie à température cryogénique et la partie de la structure de connexion à température ambiante. La traversée électrique traverse l'enceinte intermédiaire. Cette solution est par exemple décrite dans la demande de brevet EP 1 283 576. Les parois latérales de l'enceinte intermédiaire sont constituées par les parois latérales d'un cryostat. Les parois inférieure et supérieure comportent des brides de fixation au travers desquelles passe la traversée électrique, la paroi inférieure étant adjacente à la partie à température cryogénique et la paroi supérieure étant adjacente à la partie à température ambiante. L'enceinte intermédiaire est soit placée sous vide, soit remplie d'un gaz qui assure une bonne isolation à la fois thermique et électrique. Le niveau de vide ou la composition du gaz doit être choisi pour assurer cette double isolation. La paroi externe de l'enceinte intermédiaire est reliée au potentiel de la terre.

L'inconvénient de cette solution réside dans la nécessité d'une bonne étanchéité de l'enceinte intermédiaire et notamment des passages de la traversée électrique au travers des parois inférieure et supérieure, ce qui conduit à des contraintes de réalisation difficiles et coûteuses. Par exemple, même un très léger manque d'étanchéité entre la partie à température cryogénique et l'enceinte intermédiaire (par exemple une fuite de l'ordre de 10⁻⁸ mbar/l.sec) conduit inévitablement à un changement de composition du gaz ou une dégradation du niveau de vide dans l'enceinte intermédiaire. Si le fluide cryogénique est de l'azote liquide, un manque d'étanchéité conduit à la présence d'azote gazeux dans l'enceinte intermédiaire, ce qui entraîne, d'une part, une consommation supplémentaire d'azote liquide et, d'autre part, une diminution de l'isolation thermique et électrique de l'enceinte intermédiaire. La surpression dans l'enceinte intermédiaire résultant d'une telle fuite ne peut en outre pas être gérée par des soupapes de sécurité car leur ouverture signifierait la destruction du milieu d'isolation thermique et diélectrique (vide ou gaz).

La présente invention apporte une solution à ce problème technique, notamment en améliorant la structure de la traversée électrique

De façon plus précise, la présente invention concerne une traversée électrique permettant de connecter à température ambiante un élément supraconducteur situé dans une enceinte à température cryogénique, la traversée électrique traversant successivement une enceinte à température intermédiaire entre les températures ambiante et cryogénique et une enceinte à température ambiante, la traversée comportant au moins un conducteur électrique central entouré d'une gaine électriquement isolante. Selon l'invention, un écran électriquement conducteur et relié au potentiel de la terre, enserre ladite gaine isolante sur une section s'étendant depuis l'extrémité de la traversée en contact avec l'enceinte à température cryogénique jusqu'à au moins la jonction entre l'enceinte intermédiaire et l'enceinte à température ambiante.

Selon un mode de réalisation, l'écran est constitué d'une couche métallique adhérant à la paroi externe de la gaine isolante de ladite section, par exemple une couche en zinc ou une couche de peinture argentée.

De façon avantageuse, la traversée électrique comporte des moyens de déviation de champ électrique. Par exemple, l'extrémité de la gaine isolante de ladite section adjacente à l'enceinte cryogénique peut avoir une forme évasée, laquelle est recouverte par l'écran électriquement conducteur. Cette forme évasée peut être la forme de la partie supérieure d'un bulbe constituant l'extrémité de la gaine isolante de ladite section adjacente à l'enceinte cryogénique. De plus, l'extrémité de la gaine isolante de ladite section située dans la chambre à température ambiante peut avantageusement comporter un cône de contrainte.

De préférence, les coefficients d'expansion thermique des matériaux constituant le conducteur central et la gaine isolante sont choisis approximativement identiques, de sorte que ces matériaux soient compatibles avec la température cryogénique et la température ambiante. Par exemple, la gaine isolante peut être réalisée en époxy et le conducteur central en un alliage d'aluminium.

La section de la partie du conducteur central située du côté de l'enceinte cryogénique est avantageusement plus petite, sur une longueur déterminée, que la section de la partie du conducteur central située dans l'enceinte à température ambiante.

L'enceinte intermédiaire est de préférence remplie, au moins partiellement, d'un matériau solide à faible conductivité thermique, par exemple à base de mousse, comme une mousse de verre cellulaire ou une mousse au polyuréthane.

D'autres avantages et caractéristiques de l'invention apparaîtront au cours de la description qui suit d'un mode de réalisation de l'invention, donné à titre d'exemple non limitatif, en référence aux dessins annexés et sur lesquels :
- la figure 1 illustre schématiquement l'invention, et
- la figure 2 montre en coupe longitudinale un mode de réalisation de l'invention.

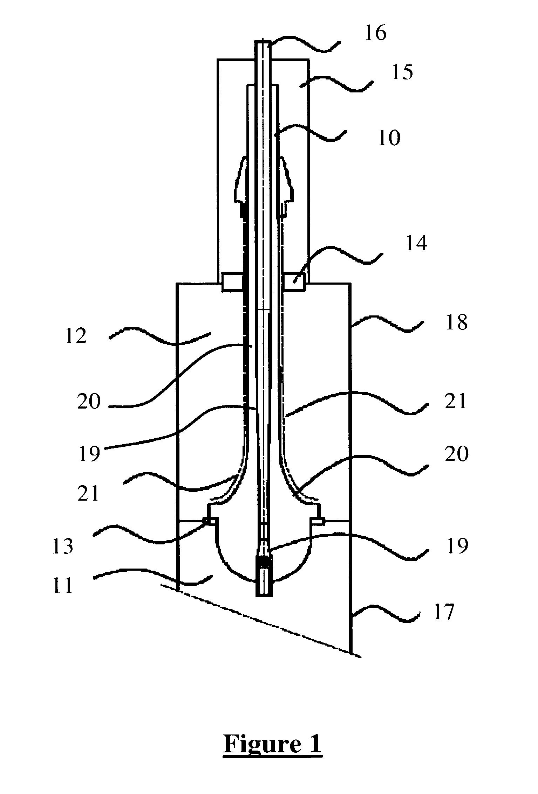

Sur la figure 1, la structure de connexion à un câble supraconducteur (non représenté) comporte une traversée électrique 10 connectée à l'élément supraconducteur par son extrémité inférieure située dans une enceinte 11 à température cryogénique. Une enceinte intermédiaire 12, adjacente à l'enceinte cryogénique 11, est remplie de préférence d'un matériau solide à faible conductivité thermique. Ce matériau peut être sous forme de mousse, telle qu'une mousse au polyuréthane ou une mousse de verre cellulaire, par exemple disponible commercialement sous la marque Foamglas. La traversée électrique 10 traverse la paroi inférieure de l'enceinte intermédiaire 11 par une bride de fixation étanche 13 et la paroi supérieure par une bride de fixation étanche 14. La traversée électrique 10 se prolonge, en sortant de l'enceinte intermédiaire 12, à l'intérieur d'une enceinte à température ambiante 15 qui se termine par des moyens 16 de connexion électrique de la traversée, et donc de l'élément supraconducteur, à un équipement ou dispositif approprié. L'enceinte intermédiaire se trouve donc à une température comprise entre la température du fluide cryogénique et la température ambiante. Les parois 17 et 18 respectivement de l'enceinte 11 à température cryogénique et de l'enceinte intermédiaire 12 forment des parois de cryostat pour une bonne isolation thermique. L'enceinte intermédiaire, étant étanche, est de préférence équipée d'une vanne de sécurité (non représentée) afin de palier à toute surpression qui pourrait survenir en cas de fuite au niveau des brides 13 et 14.

La traversée électrique 10 se compose d'un conducteur central 19 entouré d'une gaine isolante 20. Selon l'invention, un écran électriquement conducteur 21, de préférence métallique, enserre la gaine isolante sur au moins une section de gaine, c'est-à-dire sur une certaine longueur. Cet écran est avantageusement réalisé par métallisation de la gaine isolante sur ladite section, laquelle s'étend depuis la partie de l'enceinte intermédiaire en contact avec la température cryogénique jusqu'à au moins la bride 14, c'est-à-dire la jonction entre l'enceinte intermédiaire 12 avec l'enceinte à température ambiante 15. L'écran est électriquement connecté au potentiel de la terre. II a pour fonction de confiner le champ électrique le long du conducteur dans la traversée électrique uniquement, et plus précisément entre le conducteur central et l'écran.

On remarque que le problème d'une faible fuite au niveau des brides 13 et 14 est pratiquement éliminé lorsqu'un matériau solide, et non plus un gaz ou le vide, rempli l'enceinte intermédiaire 12. L'efficacité d'isolation thermique est maintenue à un niveau relativement constant, même en cas d'une fuite légère des brides 13 et 14 puisqu'elle n'aurait aucun effet sur la propriété d'isolation du matériau solide remplissant l'enceinte intermédiaire.

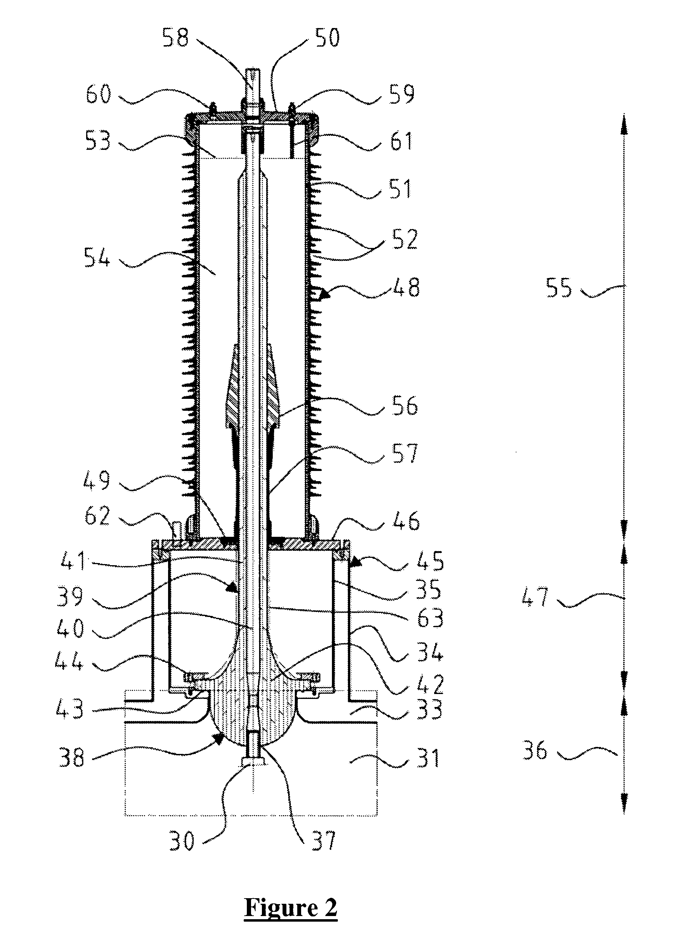

Sur la figure 2 qui représente en coupe longitudinale un mode de réalisation de l'invention, un câble supraconducteur 30 est refroidi par un fluide cryogénique 31, de l'azote liquide par exemple, contenu dans un cryostat 33 ayant une paroi externe 34 et une paroi interne 35. Le niveau de vide entre ces deux parois peut par exemple être de l'ordre de 10⁻⁵ mbar. La zone désignée par la référence 36 est à la température cryogénique, ce qui pour les supraconducteurs dits "haute température" est de l'ordre de -200°C.

L'extrémité du câble supraconducteur est reliée par une connexion électrique 37 à l'extrémité inférieure 38 d'une traversée électrique 39. Cette dernière est principalement constituée d'un conducteur central 40, en alliage d'aluminium ou en cuivre, autour duquel a été moulée une gaine électriquement isolante 41, réalisée par exemple en époxy. Cette dernière se termine à son extrémité inférieure par un bulbe 42 comprenant une collerette de fixation 43. La partie du bulbe située au dessus de la collerette 43 a une forme évasée, la partie la plus évasée étant au niveau de la collerette. Une bride 44 fixe de façon étanche le bulbe 42 sur la paroi interne 35 du cryostat 33.

Les parois interne 35 et externe 34 du cryostat se prolongent verticalement pour former les parois latérales d'une enceinte intermédiaire 45. Cette enceinte est donc bien isolée thermiquement. Le fond de cette enceinte intermédiaire est fermé de façon étanche par le bulbe 42 et le dessus de l'enceinte par un plateau 46 qui peut être réalisé en un alliage métallique (alliage d'aluminium ou acier inoxydable par exemple). La température de la zone 47 est intermédiaire entre la température cryogénique et la température ambiante.

La paroi externe d'une section de la gaine isolante est recouverte d'une couche 63 d'un matériau électriquement conducteur, par exemple par métallisation. Le métal déposé sur cette paroi externe peut être par exemple du zinc, pulvérisé sur cette paroi externe. Alternativement, cette paroi peut être rendue électriquement conductrice en la recouvrant d'une couche de peinture conductrice, telle que de la peinture argentée. La section de la gaine isolante recouverte de la couche métallique 63 s'étend depuis la collerette 43 du bulbe 42 jusqu'à une bride de fixation et d'étanchéité 49 du plateau supérieur 46 fermant le sommet de l'enceinte intermédiaire 45. La couche métallique 63 est électriquement reliée au potentiel de la terre. Elle forme donc un écran électrique qui a pour effet de canaliser les lignes de champ électrique entre le conducteur central 40 et la couche métallique 63. Cette dernière étant reliée au potentiel électrique de la terre et le câble supraconducteur étant sous haute tension, l'extrémité inférieure 38 de la gaine isolante, et donc de la couche métallique 63, a avantageusement une forme évasée, telle que la partie du bulbe 42 située au-dessus de la collerette 43, de façon à augmenter la ligne de fuite entre terre et haute tension et éviter ainsi un claquage électrique au niveau de l'extrémité 38. Au lieu d'une couche conductrice 63 déposée sur la paroi externe de l'isolant du câble, ce qui constitue la forme de réalisation préférée, on pourrait utiliser un tube cylindrique métallique enserrant la paroi externe de la gaine isolante 41 et ayant une forme évasée à son extrémité proche du bulbe 42. Ce tube serait, comme la couche conductrice 63, reliée au potentiel de la terre.

On remarque que la température du conducteur central 40 dans la zone 47 varie depuis la température cryogénique au niveau du bulbe 42 jusqu'à la température ambiante au niveau du plateau supérieur 46. La résistivité du conducteur central 40 diminuant lorsque sa température diminue, il est avantageux de diminuer la section du conducteur central pour les basses températures de façon à limiter le flux thermique, le long du conducteur, entre la partie à température ambiante et celle à température cryogénique, tout en conservant un faible niveau de pertes thermiques par effet Joule. Ainsi, sur la figure 2, la section du conducteur central 40 est plus faible au niveau du bulbe 42 qu'au niveau du haut de la chambre intermédiaire 45. En théorie, la section du conducteur devrait aller en augmentant progressivement depuis la connexion 37 avec l'élément supraconducteur jusqu'au plateau supérieur 46 à température ambiante. Cependant, la réalisation d'une telle portion de conducteur étant coûteuse, on se contente de réaliser cette variation de section sur une faible longueur, comme illustrée sur la figure 2.

L'enceinte intermédiaire est de préférence remplie d'un matériau solide à faible conductivité thermique. Ce matériau est avantageusement sous forme de mousse, telle qu'une mousse au polyuréthane ou une mousse de verre cellulaire, tel que par exemple la mousse de verre cellulaire commercialisée sous la marque Foamglas. Il est préférable de remplir complètement l'enceinte intermédiaire de ce matériau solide, mais on peut concevoir de ne la remplir que partiellement. Pour remplir l'enceinte intermédiaire, un ou plusieurs blocs de mousse solide peuvent être usinés, par exemple deux blocs en forme de demie coquille ou un bloc usiné avec un trou central ayant une forme complémentaire de la partie de la traversée électrique 39 située dans l'enceinte intermédiaire 45, ce ou ces blocs étant ensuite placé(s) dans l'enceinte intermédiaire.

Au-dessus de l'enceinte intermédiaire 45, une enceinte à température ambiante 48 est fixée sur le plateau 46. Ce dernier a une bonne conductivité thermique de façon à établir un bon échange thermique entre la température ambiante de l'air et le bas de l'enceinte à température ambiante 48. La traversée électrique 39 traverse de façon étanche cette paroi supérieure 46 à l'aide d'une bride de fixation et d'étanchéité 49 et débouche à l'extérieur de l'enceinte 48 à travers la paroi supérieure 50 de cette enceinte à température ambiante. La paroi latérale de cette dernière est constituée d'un isolant électrique 51, par exemple une époxy renforcée par des fibres de verre, désignée habituellement par FRP (abréviation de "Fiber Reinforced Polymer"). La surface externe de cette paroi comporte une succession d'ailettes 52 en matériau isolant, par exemple en silicone, destinées à allonger le parcours d'un courant de fuite éventuel en surface, dû à des impuretés déposées sur cette surface et apportées par la pollution environnante et par la pluie. L'enceinte 48 à température ambiante est remplie jusqu'au niveau 53 d'un liquide 54 bon isolant électrique, tel que de l'huile silicone. En plus d'assurer une bonne isolation électrique de la traversée électrique 39, le liquide 54 facilite la stabilisation thermique de l'enceinte à température ambiante. La zone 55 est ainsi à une température proche de la température ambiante.

Un cône de contrainte 56, situé dans l'enceinte 48 à température ambiante, entoure la traversée électrique 39 au niveau de l'arrêt de la couche métallisée 63. La partie conductrice du cône de contrainte est reliée électriquement à la couche métallisée 63 ainsi qu'à la bride de fixation étanche 49, électriquement conductrice, par l'intermédiaire par exemple d'un enrubannage 57 de rubans semi-conducteurs. La couche métallique 63 peut être arrêtée au niveau de la bride de fixation 49 ou être prolongée directement jusqu'à la partie conductrice du cône de contrainte 56, l'essentiel étant d'avoir une bonne continuité électrique entre la couche métallique 63 et la partie conductrice du cône de contrainte. La fonction de ce cône de contrainte est de dévier ou d'évaser les lignes de champ électrique au niveau de l'arrêt de la métallisation afin d'éviter une discontinuité qui pourrait conduire à un claquage électrique. La traversée électrique 39 se termine à l'extérieur de l'enceinte à température ambiante 48 par une cosse de connexion 58 pour alimenter le câble supraconducteur en courant électrique sous moyenne ou haute tension ou pour alimenter un équipement à température ambiante en courant électrique sous moyenne ou haute tension en provenance du câble supraconducteur 30.

Le plateau 46 est de préférence munie d'une vanne de sécurité 62 afin d'évacuer une éventuelle surpression dans l'enceinte intermédiaire 45 qui pourrait être due à une fuite de liquide réfrigérant au niveau de la collerette 43 et de la bride de fixation 44, le liquide réfrigérant passant alors sous forme gazeuse dans l'enceinte intermédiaire.

L'enceinte à température ambiante comporte également deux vannes de connexion 59 et 60 permettant le remplissage d'huile, la vanne 58 étant reliée à un tuyau plongeur 61 en polyéthylène permettant de contrôler le niveau d'huile dans l'enceinte.

Le champ électrique étant confiné entre le conducteur central 40 et la couche conductrice 63 et étant dévié aux deux extrémités de la couche conductrice 63, d'une part par la forme évasée due à la forme du bulbe 42 et, d'autre part, par le cône de contrainte 56, il n'est pas nécessaire que l'enceinte intermédiaire soit placée sous vide ou remplie d'un matériau électriquement isolant (un gaz par exemple).

La structure de connexion électrique qui vient d'être décrite et qui comporte une enceinte intermédiaire avantageusement remplie d'un matériau solide et bon isolant thermique permet une bonne transition de température entre la partie à température cryogénique et la partie à température ambiante, avec un flux thermique limité dans le liquide cryogénique et compatible avec les conditions de fonctionnement de l'installation et avec un entretien aisé en atelier et sur le site. La hauteur de la structure, et notamment la hauteur de l'enceinte intermédiaire, peut être facilement adaptée aux conditions de différence de températures entre la partie cryogénique et la partie ambiante et aux conditions électriques telles que les valeurs de la tension et du courant.

Le mode de réalisation décrit se rapporte à la connexion d'un câble supraconducteur. Il est cependant évident pour l'homme du métier que l'invention s'applique à la connexion de tout élément supraconducteur, à température cryogénique, qui doit être relié à un équipement ou dispositif ou appareil à température ambiante.

## Revendications

1. Traversée électrique (39) permettant de connecter à température ambiante un élément supraconducteur (30) situé dans une enceinte à température cryogénique (31), ladite traversée électrique traversant successivement une enceinte à température intermédiaire (45) entre les températures ambiante et cryogénique et une enceinte à température ambiante (48), ladite traversée comportant au moins un conducteur électrique central (40) entouré d'une gaine électriquement isolante (41), **caractérisée en ce qu**'un écran (63), électriquement conducteur et relié au potentiel de la terre, enserre ladite gaine isolante (41) sur une section s'étendant depuis l'extrémité (43) de la traversée en contact avec l'enceinte à température cryogénique jusqu'à au moins la jonction (49) entre l'enceinte intermédiaire et l'enceinte à température ambiante.

2. Traversée électrique selon la revendication 1 **caractérisée en ce que** ledit écran est constitué d'une couche métallique (63) adhérant à la paroi externe de la gaine isolante (41) de ladite section.

3. Traversée électrique selon la revendication 2 **caractérisée en ce que** ladite couche métallique (63) est formée d'une couche en zinc déposée sur la paroi externe de la gaine isolante (41) de ladite section.

4. Traversée électrique selon la revendication 2 **caractérisée en ce que** ladite couche métallique (63) est formée par une peinture argentée.

5. Traversée électrique selon l'une des revendications précédentes **caractérisée en ce que** la gaine isolante (41) comporte, à au moins l'une des deux extrémités de ladite section, des moyens (42,56) de déviation de champ électrique.

6. Traversée électrique selon la revendication 5 **caractérisée en ce que** l'extrémité (42) de la gaine isolante de ladite section adjacente à l'enceinte cryogénique a une forme évasée, laquelle est recouverte dudit écran métallique.

7. Traversée électrique selon la revendication 6 **caractérisée en ce que** l'extrémité de la gaine isolante de ladite section adjacente à l'enceinte cryogénique a une forme de bulbe (42) placé entre l'enceinte cryogénique (31) et l'enceinte intermédiaire (45), la partie du bulbe située dans l'enceinte intermédiaire ayant ladite forme évasée.

8. Traversée électrique selon la revendication 5 **caractérisée en ce que** l'écran (63) s'étend jusque dans l'enceinte à température ambiante (48) et **en ce qu'**un cône de contrainte (56) est fixé autour de ladite gaine isolante (41) et relié électriquement à l'extrémité de l'écran située dans la chambre à température ambiante.

9. Traversée électrique selon l'une des revendications précédentes **caractérisée en ce que** les coefficients d'expansion thermique des matériaux constituant le conducteur central (40) et la gaine isolante (41) sont approximativement identiques, de sorte que lesdits matériaux soient compatibles avec les températures cryogénique et ambiante.

10. Traversée électrique selon la revendication 9 **caractérisée en ce que** la gaine isolante (41) est réalisée en époxy et le conducteur central (40) en un alliage d'aluminium

11. Traversée électrique selon l'une des revendications précédentes **caractérisée en ce que** la section de la partie du conducteur central (40) située du côté de l'enceinte cryogénique est plus petite, sur une longueur déterminée, que la section de la partie du conducteur central située dans l'enceinte à température ambiante.

12. Traversée électrique selon l'une des revendications précédentes **caractérisée en ce que** l'enceinte intermédiaire (45) est remplie, au moins partiellement, d'un matériau solide à faible conductivité thermique

13. Traversée électrique selon la revendication 12 **caractérisée en ce que** ledit matériau est à base de mousse.

14. Traversée électrique selon la revendication 12 **caractérisée en ce que** ledit matériau est une mousse de verre cellulaire ou une mousse au polyuréthane.

## Claims

1. An electrical through-hole (39) for connecting at room temperature a superconducting element (30) located in a chamber at a cryogenic temperature (31), said electrical through-hole passing successively through a chamber at an intermediate temperature (45) between the room and cryogenic temperatures and a chamber at room temperature (48), said through-hole including at least one central electrical conductor (40) surrounded with an electrically insulating sheath (41), **characterized in that** an electrically conducting shield (63) connected to ground potential, encircles said insulating sheath (41) over a section extending from the end (43) of the through-hole in contact with the chamber at a cryogenic temperature as far as at least the junction (49) between the intermediate chamber and the chamber at room temperature.

2. The electrical through-hole according to claim 1, **characterized in that** said shield consists of a metal layer (63) adherent to the external wall of the insulating sheath (41) of said section.

3. The electrical through-hole according to claim 2, **characterized in that** said metal layer (63) is formed with a zinc layer deposited on the external wall of the insulating sheath (41) of said section.

4. The electrical through-hole according to claim 2, **characterized in that** said metal layer (63) is formed by silver paint.

5. The electrical through-hole according to any of the preceding claims, **characterized in that** the insulating sheath (41) at least includes at one of the two ends of said section, electric field deviation means (42, 56).

6. The electrical through-hole according to claim 5, **characterized in that** the end (42) of the insulating sheath of said section adjacent to the cryogenic chamber has a flared shape, which is covered with said metal shield.

7. The electrical through-hole according to claim 6, **characterized in that** the end of the insulating sheath of said section adjacent to the cryogenic chamber has a bulb shape (42) placed between the cryogenic chamber (31) and the intermediate chamber (45), the portion of the bulb located in the intermediate area having said flared shape.

8. The electrical through-hole according to claim 5, **characterized in that** the shield (63) extends as far as into the chamber at room temperature (48) and **in that** a stress cone (56) is attached around said insulating sheath (41) and electrically connected to the end of the shield located in the chamber at room temperature.

9. The electrical through-hole according to any of the preceding claims, **characterized in that** the heat expansion coefficient of the materials forming the central conductor (40) and the insulating sheath (41) are approximately identical, so that said materials are compatible with the cryogenic and room temperatures.

10. The electrical through-hole according to claim 9, **characterized in that** the insulating sheath (41) is made in epoxy and the central conductor (40) in an aluminum alloy.

11. The electrical through-hole according to any of the preceding claims, **characterized in that** the section of the portion of the central conductor (40) located on the side of the cryogenic chamber is smaller, over a determined length, than the section of the portion of the central conductor located in the chamber at room temperature.

12. The electrical through-hole according to any of the preceding claims, **characterized in that** the intermediate chamber (45) is at least partly filled with a solid material having low heat conductivity.

13. The electrical through-hole according to claim 12, **characterized in that** said material is based on foam.

14. The electrical through-hole according to claim 12, **characterized in that** said material is a cellular glass foam or a polyurethane foam.

## Patentansprüche

1. Elektrische Durchführung (39) zum Verbinden eines in einem Gehäuse mit kryogener Temperatur (31) angeordneten supraleitenden Elements (30) bei Umgebungstemperatur, wobei die elektrische Durchführung nacheinander durch ein Gehäuse mit Zwischentemperatur (45) zwischen der Umgebungstemperatur und der kryogenen Temperatur und ein Gehäuse mit Umgebungstemperatur (48) geführt wird, wobei die Durchführung mindestens einen zentralen elektrischen Leiter (40) umfasst, der von einer elektrisch isolierenden Umhüllung (41) umgeben ist, **dadurch gekennzeichnet, dass** eine elektrisch leitfähige und mit dem Erdpotenzial verbundene Abschirmung (63) die isolierende Umhüllung (41) über einen Abschnitt umschließt, der sich von dem Ende (43) der Durchführung, das an dem Gehäuse mit kryogener Temperatur anliegt, mindestens bis zu der Verbindungsstelle (49) zwischen dem Zwischengehäuse und dem Gehäuse mit Umgebungstemperatur erstreckt.

2. Elektrische Durchführung nach Anspruch 1, **dadurch gekennzeichnet, dass** die Abschirmung aus einer metallischen Schicht (63) besteht, die an der Außenwandung der isolierenden Umhüllung (41) des Abschnitts haftet.

3. Elektrische Durchführung nach Anspruch 2, **dadurch gekennzeichnet, dass** die metallische Schicht (63) aus einer auf die Außenwandung der isolierenden Umhüllung (41) des Abschnitts abgeschiedenen Zinkschicht gebildet ist.

4. Elektrische Durchführung nach Anspruch 2, **dadurch gekennzeichnet, dass** die metallische Schicht (63) aus einem Silberlack gebildet ist.

5. Elektrische Durchführung nach einem der vorhergehenden Ansprüche, **dadurch gekennzeichnet, dass** die isolierende Umhüllung (41) an mindestens einem der beiden Enden des Abschnitts Mittel (42,56) zur Ablenkung eines elektrischen Feldes umfasst.

6. Elektrische Durchführung nach Anspruch 5, **dadurch gekennzeichnet, dass** das Ende (42) der isolierenden Umhüllung des an das kryogene Gehäuse angrenzenden Abschnitts eine sich aufweitende, mit der metallischen Abschirmung beschichtete Form hat.

7. Elektrische Durchführung nach Anspruch 6, **dadurch gekennzeichnet, dass** das Ende der isolierenden Umhüllung des an das kryogene Gehäuse angrenzenden Abschnitts die Form einer Zwiebel (42) aufweist, die zwischen dem kryogenen Gehäuse (31) und dem Zwischengehäuse (45) angeordnet ist, wobei der in dem Zwischengehäuse angeordnete Teil der Zwiebel die sich aufweitende Form hat.

8. Elektrische Durchführung nach Anspruch 5, **dadurch gekennzeichnet, dass** die Abschirmung (63) sich bis in das Gehäuse mit Umgebungstemperatur (48) erstreckt und **dadurch**, dass ein Feldsteuerkonus (56) um die isolierende Umhüllung (41) fixiert ist und elektrisch mit dem in der Kammer mit Umgebungstemperatur angeordneten Ende der Abschirmung verbunden ist.

9. Elektrische Durchführung nach einem der vorhergehenden Ansprüche, **dadurch gekennzeichnet, dass** die thermischen Ausdehnungskoeffizienten der Materialien, aus denen der zentrale Leiter (40) und die isolierende Umhüllung (41) bestehen, annähernd gleich sind, so dass die Materialien mit der kryogenen Temperatur und der Umgebungstemperatur kompatibel sind.

10. Elektrische Durchführung nach Anspruch 9, **dadurch gekennzeichnet, dass** die isolierende Umhüllung (41) aus Epoxidharz und der zentrale Leiter (40) aus einer Aluminiumlegierung hergestellt ist.

11. Elektrische Durchführung nach einem der vorhergehenden Ansprüche, **dadurch gekennzeichnet, dass** der Querschnitt des Teils des zentralen Leiters (40), der auf der dem kryogenen Gehäuse zugekehrten Seite angeordnet ist, über eine bestimmte Länge kleiner ist als der Querschnitt des Teils des zentralen Leiters, der in dem Gehäuse mit Umgebungstemperatur angeordnet ist.

12. Elektrische Durchführung nach einem der vorhergehenden Ansprüche, **dadurch gekennzeichnet, dass** das Zwischengehäuse (45) zumindest teilweise mit einem gering wärmeleitfähigen festen Material gefüllt ist.

13. Elektrische Durchführung nach Anspruch 12, **dadurch gekennzeichnet, dass** das Material ein Material auf Schaumstoffbasis ist.

14. Elektrische Durchführung nach Anspruch 12, **dadurch gekennzeichnet, dass** das Material geschäumtes Glas oder ein Polyurethan-Schaum ist.
